# EUROPEAN PATENT APPLICATION

(11) **EP 3 586 693 A1**
(43) Date of publication of application: **01.01.2020**
(21) Application number: 19181878.0
(22) Date of filing: 23.06.2019
(51) Int. Cl.: A47J 31/42, A47J 31/52

(54) **METHOD FOR MANAGING AN ESPRESSO COFFEE MACHINE**

(30) Priority: 26.06.2018 IT 201800006645
(71) Applicant: Global Coffee Service F.V., 35641 Schoffengrund-Laufdorf (DE)
(72) Inventor: Vettorel, Fabio, 35641 schoffengrund-Laufdorf (DE)
(74) Representative: Citron, Massimiliano

(57) **Abstract**

To improve the regulation of the grain size produced by a coffee grinder (64) a method is described for managing an (10) espresso coffee machine. The method comprises the steps of
(i) electronically acquiring, through an image sensor (42), an electrical signal or a digital data indicative of the shape of a liquid thread (100) percolating from the outlet (14) of the machine,
(ii) processing the image to distinguish a second thread of liquid (104) comprised in said liquid thread (100);
(iii) calculating the dimension of the second liquid thread (104), and
(iv) generating an electrical signal dependent on said dimension.

## Description

The invention refers to a method for managing an espresso coffee dispensing machine, in particular an adjustment method for the grinding fineness of a coffee grinder or grinder-dispenser, and an apparatus which implements the method.

The preparation of good espresso coffee is a complex technique that requires the coincidence of many factors. One is the precise and repeatable grain-size of the ground coffee: if it is too large it will cause under-extraction (i.e. insufficient extraction) of the aromas, if it is too fine it will cause over-extraction. Together with e.g. the precise weight of the powder dose of ground coffee, the water pressure and temperature, the correct grain-size reflects in a smooth and steady descent into the coffee cup (in coffee lingo, a "mouse tail" percolation). What is called a "mouse tail" is a thin, continuous thread of coffee, similar to honey dripping from a teaspoon, and of a peculiar color.

A bartender must manually adjust the fineness of the coffee in the grinder to get the optimal percolation, but experience and time are needed. When one or the other is missing, the coffee is served with sub-excellent flavor.

To help bartenders there is a grinder-dispenser controlled by the espresso machine as described in EP3042591, wherein by electronic detection of the shape of the percolation the machine automatically adjusts the fineness of grinding.

The apparatus described in EP3042591 can be improved.

The Applicant of the present invention has, in fact, discovered that in addition to the shape of percolation there are other parameters to consider ensuring in time the optimal coffee preparation.

The main object of the invention is to improve the system in EP3042591.

Another object is to implement a further advantageous effect in the system of EP3042591.

In particular, another object is to improve the quality of espresso coffee by better controlling the fineness of the grain-size used for the extraction of coffee compared to the EP3042591 system.

In particular, another object is to detect the quality and/or status of aging of the coffee present in a tank of the grinder.

In particular, another object is to detect the quantity of coffee present in a tank of the grinder or in the filter holder.

In particular, another object is to improve an espresso coffee machine.

The invention is defined in the attached claims, in which the dependent claims define advantageous variants.

A method is proposed for managing an espresso coffee dispensing machine comprising the steps of
(i) electronically acquiring, via an image sensor, an electric signal or a digital data indicative of the shape of a thread of liquid while it percolates from the outlet of the machine (e.g. from the spout of a filter holder containing coffee powder),
(ii) processing the image to distinguish a second thread of liquid comprised in said thread of liquid,
   wherein for example the second thread of liquid is formed by different liquid (e.g. different color and/or different chemical composition) from the one in which it is comprised;
(iii) calculating the size of the second thread of liquid, and
(iv) generating an electrical signal dependent on - or as a function of - said dimension.

Such dimension may be e.g. the diameter or radius of the percolating thread, the horizontal distance or width between two edges of the percolating thread, the length of the percolating thread, the curvature of the percolating thread, etc.

Thanks to the monitoring and/or detection of the second thread of liquid and to the signal obtained from step (iv) - and/or the processing thereof - the functionality of the espresso machine can be expanded and/or advantages obtained.

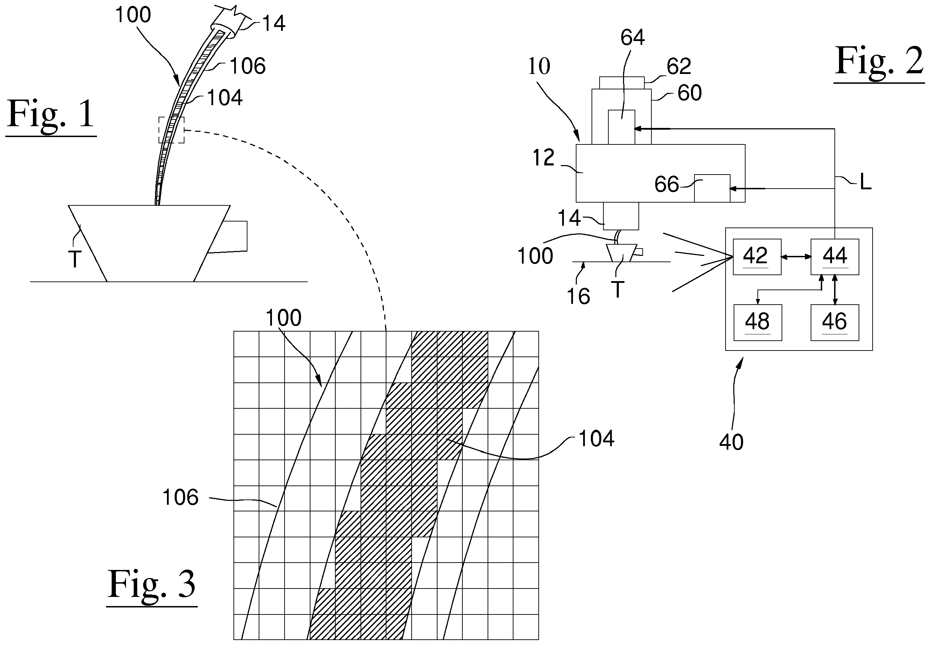

An old or long-preserved coffee does not behave, when ground, as a freshly roasted and packed coffee. From old or (too long) preserved coffee it is possible to extract less organoleptic substances, therefore (see fig. 1) inside the thread of liquid 100 percolating from the outlet or dispenser 14 of the espresso machine only for a short time - or almost never - there is a second thread 104 of coffee extract; the rest is water 106. Instead, with a fresh coffee, the thread of liquid 100 is filled with coffee extract 104 almost anywhere and by the whole duration of the percolation.

Since in general the thread 104 of percolating liquid which comprises extract of coffee is dark while water 106 is transparent, from the contrast of colors and/or transparency, via digital image processing, one can distinguish the second thread 104 inside the first 100 and calculate, also in real time, the absolute (e.g. in mm) or relative (with respect to the thread 100 that contains it) size thereof. Then by elaborating this data it is possible to generate a signal which depends - in fact - on the proportion between coffee extract 104 and water 106 inside the percolating thread 100 to obtain various advantages. The generated signal then reflects that proportion and it can be exploited to indirectly determine a condition of the machine, such as to determine the quality of percolation or the state of aging of coffee, or other, as explained below.

According to a preferred variant, the signal generated in step (iv) drives a display to display a data related to the percolation quality, and/or to the state of aging of the coffee and/or the operational state of the aforementioned machine that has the coffee currently loaded in a grinder of its own. So one can display to the user the result of the analysis of the percolating coffee thread, to inform him in real time and/or to give him corrective suggestions for a manually adjustable grinder.

The user (i.e. an operator able to manually vary the fineness of grinding) can be driven by the machine to adjust the grain-size through e.g. an audible and/or visual warning (e.g. an image and/or a message shown on a display).

According to a preferred variant, the signal generated in step (iv) drives an actuator of the grinder to adjust the grain-size as a function of the signal or of the detected data. Thus the result of the analysis of the percolating coffee thread acts directly in a corrective manner on the grinder, automatically without manual intervention. It follows that the machine can auto-set the grinding fineness in the grinder to constantly ensure an adequate composition of extract in the percolating thread. The machine can thus adapt to the type and age of the coffee loaded in the grinder.

In the following it is meant that the invention is applicable to a grinder or a grinder-dispenser, since the dosage can take place downstream of the grinding by different and/or separate means and/or steps.

Another advantage of the invention is the precision and sensitivity of intervention on the grinding, because even slight fluctuations or oscillations in the dimensional ratios of the liquids making up the percolating thread 100 can be detected and intervention can be taken on the grinding by adjustments. Therefore the reference of grinding fineness is followed with great precision and over time.

Another advantage is the absence or high reduction of fluctuations on the quality of coffee dispensed over time.

As an advantageous variant, in the method the electrical signal or a data indicative of the size of the second thread of liquid may be compared with an electrical signal or a data indicative of a reference dimension, and
said signal may be generated as a function of the result of the comparison (e.g. with proportional control: the greater the offset the greater the correction on the grinding). Not only does the accuracy of the adjustment increase, but various references may be operated with, e.g. by storing in a memory data related to them and/or by selecting by choice from a memory data relating to them and on which the comparison is made. Thus it is possible to adapt the method to various types of coffee blends and/or different types of dispensing/ percolation.

As an advantageous variant, in the method the shape of the coffee percolating thread is detected through electronic acquisition of digitized image, so as to convert it into pixels. The digitization into pixels has the great advantage that the percolating thread and the possible second inner thread can be measured by counting the pixels that form them. It is therefore also very easy to make comparisons with threshold values for the dimensions.

E.g. a digital camera or an analog camera can be used and then the signal thereof is converted with known ADC converter circuits.

As an even more advantageous variant, the electronic image acquisition takes place via infrared rays.

The digitization into pixels has the big advantage that the percolating thread and the possible second inner thread are measurable by counting the pixels that form them. It is therefore also very easy to perform comparisons with threshold values for dimensions.

It has been found experimentally that an overall resolution of 20 pixels is sufficient for the percolation width (the "mouse tail"). Anyway, said resolution may vary according to the type and/or sensor in the image acquisition electronics, and according to the distance from the "mouse tail".

As an advantageous variant, in step (iii) the calculated dimension is a linear dimension, which also allows measuring the width of the second thread. If one wants to measure the width of the second thread in a simple way, the pixels aligned along said linear dimension can be counted.

As an advantageous variant that simplifies the processing, in step (iii) the calculated dimension is a linear dimension measured along a substantially horizontal plane.

For greater dimensional accuracy the width of the second thread may be measured with respect to the direction of percolation, which at various points is inclined compared to the horizon. Then as an even more advantageous variant, in step (iii) the calculated dimension is a linear dimension measured along a plane substantially orthogonal to the percolation direction.

Another aspect of the invention is a device for a coffee espresso machine, in particular a device to adjust the grinding fineness produced by a coffee grinder (e.g. in grains) that feeds the machine, the device comprising
- an electronic image sensor for generating an electrical signal corresponding to the image of a thread of liquid as it percolates from the outlet of a machine's dispenser (e.g. from a spout of the filter holder of the machine or from the generic outlet spout),
- an electronic circuit configured for
   processing the generated signal in order to distinguish a second thread of liquid comprised in said thread of liquid, wherein e.g. the second thread of liquid is formed from different liquid (e.g. different color and/or different chemical composition) from the one in which it is comprised;
   calculating the dimension of the second thread of liquid, and generating an electrical signal dependent on - or as a function of - said dimension.

Such dimension may be e.g. the diameter or radius of the percolating thread, the horizontal distance or width between two edges of the percolating thread, the length of the percolating thread, the curvature of the percolating thread, etc.

The aforementioned device can be e.g. an accessory that can be connected to the machine or a device permanently integrated in the machine.

In particular, in the method and in the device for adjusting, the second thread of liquid is inside the percolating thread, more particularly the second thread of liquid is coaxial and/or concentric to the percolating thread.

Preferably the espresso coffee dispensing machine is equipped with a coffee grinder (e.g. for coffee beans), the grinder being able to grind with adjustable grain-size. In this way, through the signal of step (iv), one can feedback control the grinder to adjust its grain size and to obtain the correspondence (or equality) between thread 100 and thread 104. That is, the electronic circuit is configured to feedback control the grinder to adjust the grain-size thereof as a function of said electrical signal.

The aforementioned variations expressed for the method apply to the device.

The device may comprise means for carrying out one or each step of the method as described above, e.g. a logical unit (PC or PLC or microprocessor) programmed for, or an electronic circuit adapted for,
comparing the acquired image with an electrical signal or a data indicative of a reference percolation shape for the second thread of liquid, and
electrically driving an actuator to adjust the fineness of the grinder as a function of the result of the comparison; and/or
electrically controlling a display to display information dependent on the result of the comparison.

Preferably the device comprises
- a memory in which the unit can store reference dimensions for the second thread of liquid; and/or
- mirrors and/or lenses for optical relay/processing of the image; and/or
- an infrared image sensor to detect said thread of percolating liquid; and/or
- a camera to detect said percolating thread of liquid.

Preferably the logic unit is programmed for, or the electronic circuit is configured to, perform one or each step of the method as described above.

Another aspect of the invention is the device when added or associated to a pre-existing espresso coffee machine. In fact the device may be
permanently integrated into the coffee machine structure, or
an accessory adapted to be connected to an existing coffee espresso machine to form an improved espresso coffee machine, or
a stand-alone accessory device adapted to interact temporarily with a pre-existing coffee espresso machine. The device, in this case, is portable, e.g. a kind of detection gun, and can be used to analyze the real-time operation of an espresso coffee machine. The electronic image sensor is configured to be pointed towards the percolation to acquire the image thereof, and the subsequent processing performed by the device is able to generate useful information for the user.

Another aspect of the invention is an espresso coffee machine that comprises the device defined above.

Note that for each of the aforementioned aspects the following surprising advantages apply.

First, the aforementioned image processing can also determine if the quantity of coffee present on the filter holder is scarce. In particular it also succeeds in determining whether the coffee, although of quality, is not in a standard quantity, e.g. 7g per dispensed coffee. This is because in both cases the quantity of coffee is not enough to release enough essence to color properly all the liquid thread for the whole duration of the percolation. Thus e.g. as a variant the invention may envisage to generate
an electrical signal for a display so as to display an alarm and/or an indication; and/or
an electrical compensatory signal for an electric actuator, which is adapted to adjust and/or increase the amount of coffee to be used for the subsequent percolation.

In sum, the signal of step (iv) can also be used as a scarcity data for the coffee weight.

Second, the aforementioned image processing manages to determine the condition of failure to fill the coffee bean tank of the grinder, an error that causes a gap in the grinding due to the absence of coffee.

In sum, the signal of step (iv) can also be used as a data for the level of the grinder tank.

Third, the aforementioned image processing can also determine the excessive granulometric level of the coffee, because a coffee which is too roughly ground can generate a poor color contrast in the percolation, that is a very diluted coffee. The cause is that the essence of coffee is not correctly extracted, so the water passes through it but without infusion.

Another aspect of the invention is a software program comprising instructions that when executed in a processor - or in said logic unit -perform the steps of the method, with or without one or each of the variants above defined.

The advantages of the invention will be clearer from the following description of a preferred embodiment of a device for adjusting the grinding fineness of coffee, referring to the enclosed drawing in which
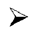 Fig. 1 shows in schematic view a percolation of espresso coffee;
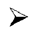 Fig. 2 shows a block diagram of an adjustment device;
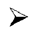 Fig. 3 shows in a schematic view a digitized image of a detail of fig. 1,
where a pixel grid is used.

In the following figures, equal numbers indicate equal parts.

Fig. 2 shows a known machine 10 for espresso coffee, which comprises a frame or casing 12 in which there is a known support plane 16 for cups T. Above and vertically to the plane 16 one or more dispensers 14 of espresso coffee of known type are arranged in a known manner.

In the machine 10 or in its vicinity there is a device 40, which can be mounted or integrated in the frame 12, e.g. protruding from the plane 16 or from the wall behind the dispensers 14 as in fig. 2.

The device 40 comprises an image sensor 42 facing a cup T placed under a dispenser 14. The sensor 42 is able to detect the shape of the percolation of coffee 100 which falls from the dispenser 14 into a cup T.

The sensor 42 emits an electrical signal interpreted or converted by a logic unit 44, e.g. a PLC or microprocessor, into pixels.

The unit 44 via a line L is connected to
a coffee grinder 60 equipped with a tank 62 for coffee beans, and/or
a display 66, e.g. placed on the frame 12.

In particular the unit 44 can drive electromechanical a grinding member or operator 64, e.g. an electric motor, so as to be able to control the fineness of grinding. The member 64 is operated e.g. in a known way by an electric motor and comprises variable distance grinders.

The unit 44 may be electrically connected with a ROM and/or RAM memory 46, to read and store data.

In particular, the read data can be data indicative of one or more reference dimensions with which to compare the acquired signal of the current percolation 100.

### OPERATION

When the machine 10 is dispensing coffee into the cup T, the sensor 42 is active and detects an image of the percolation 100. The unit 44 reads the data from the sensor 42 and, based on a program, transforms them into pixels and/or interprets the image of percolation 100 as a set of pixels (see e.g. fig. 3). The discretization into pixels advantageously allows
separating, e.g. by differentiating by color or luminance or transparency, the components in the percolation 100 (in particular between water 106 and coffee extract 104, which is darker), and/or
evaluating the absolute or relative dimensions of such image components through pixel counting. Such dimensions may be e.g. the diameter of the percolating thread, its length, the curvature, etc.

Then the unit 44 may
- check if and how much the percolation 100 is full of extract 104, and/or
- determine the percentage of filling of the thread 100 with respect to the thread 104, and/or
- determine the absolute or relative dimension of the extracted thread 104.

In case such filling percentage and/or the absolute or relative dimension of the extracted thread 104 are not within certain thresholds, the unit 44 may
- drive the member 64 to adjust the fineness of the ground coffee powder for the next coffee supply. E.g. if the extracted thread 104 is too small or narrow compared to the silhouette of the overall percolation thread 100, the member 64 is adjusted by the unit 44 to increase the fineness of the ground coffee powder for the next coffee supply; and/or
- drive the display 66 to display information relating to dimensions of the extracted thread 104 and/or the proportion of the extracted thread 104 compared to the silhouette of the percolation 100. Thus a user can consequently adjust the fineness of the grinding.

E.g. it has been found experimentally that an overall resolution of 20 pixels is sufficient for the width of the percolation 100 (the "tail of the mouse").

The system is open to many variations.

The image sensor 42 converts an optical image into an electric signal. E.g. digital cameras, cameras (also analog), in color or black and white, or sensors with CCD or CMOS technology can be used.

The image sensor 42 may be mounted or integrated into the machine 10, as in fig. 1, or remotely placed in a separate accessory. And it may be connected directly to the unit 44, for example through electric lines or connections, or via wireless data transmission channels. The same applies to the connection between the unit 44 and the member 64 and/or display 66.

The unit 44 is preferably programmable and operating in the digital domain, but a circuit with discrete components can also be used.

In the memory 46 the unit 44 may store several working parameters, such as the commands to be given to the member 64 as a function of the signals detected by the sensor 42 and/or as a function of the processing performed on such signals.

The device 40 may comprise a selection stage 48, or a user interface stage, such as a keyboard. The advantage is to facilitate programming of the unit 44, e.g. to choose from the memory 46 a dimensional threshold for the extract thread 104 or working timings. The stage 48 may comprise a data input circuit, such as a USB or Bluetooth socket, for entering/receiving data in/from the memory 46, e.g. programs for the unit 44 or said dimensional thresholds for the extracted thread 104.

## Claims

1. Method for managing an espresso coffee dispensing machine (10) comprising the steps of
(i) electronically acquiring, through an image sensor (42), an electrical signal or a digital data indicative of the shape of a thread of liquid (100) while it percolates from the outlet (14) of the machine,
(ii) processing the image to distinguish a second thread of liquid (104) comprised in said thread of liquid (100);
(iii) calculating the dimension of the second thread of liquid (104), and
(iv) generating an electrical signal dependent on said dimension.

2. Method according to claim 1, wherein the signal generated in step (iv) drives a display to display a data related to the percolation quality, and/or to the state of coffee aging and/or to the operating state of the machine having the coffee currently loaded in a grinder.

3. Method according to claim 1 or 2, wherein the signal generated in step (iv) drives a grinder's actuator to regulate the particle size thereof as a function of the signal or the detected data.

4. Method according to claim 1 or 2 or 3, wherein the electrical signal or a data indicative of the dimension of the second thread of liquid (104) is compared with an electrical signal or a data indicative of a reference dimension, and said signal is generated as a function of the result of the comparison.

5. Method according to any of the previous claims, wherein the shape of the percolating coffee thread (100) is detected by electronic digitized image acquisition so as to convert it into pixels, the percolating thread and the possible second inner thread being measured by counting the pixels that form them.

6. Method according to any preceding claim, wherein in step (iii) the calculated dimension is a linear dimension, and the width of the second thread (104) is measured by counting pixels aligned along said linear dimension.

7. Device (40) for an espresso coffee dispensing machine (10), the device comprising
- an electronic image sensor (42) for generating an electrical signal corresponding to the image of a thread of liquid (100) percolating from the outlet of a dispenser (14) of the machine,
- an electronic circuit (42) configured for
processing the generated signal in order to distinguish a second thread of liquid (104) comprised in said liquid thread;
calculating the dimension of the second thread of liquid (104), and generating an electrical signal dependent on said dimension.

8. Device (40) according to claim 7, wherein the machine (100) is provided with a coffee grinder (60), and the electronic circuit (42) is configured to feedback control the grinder (60) in order to adjust the grinding grain-size thereof as a function of said electrical signal.

9. Device (40) according to claim 7 or 8, wherein the machine (100) is provided with a coffee grinder (60), and the electronic circuit (42) is configured for
comparing the acquired image with an electrical signal or a data indicative of a reference percolation shape for the second thread of liquid (104), and
electrically driving an actuator (64) to adjust the fineness of the grinder as a function of the result of the comparison.

10. Device (40) according to claim 7 or 8, wherein the machine (100) is provided with a coffee grinder (60), and the electronic circuit (42) is configured for
comparing the acquired image with an electrical signal or a data indicative of a reference percolation shape for the second liquid thread (104), and
electrically driving a display to display information which depend on the result of the comparison.

11. Espresso coffee machine comprising a device according to any of the preceding claims.

12. Software program comprising instructions that when performed in a processor perform the steps of the method according to any of the preceding claims.
